# EUROPEAN PATENT APPLICATION

(11) **EP 4 851 887 A1**
(43) Date of publication of application: **09.12.2026**
(21) Application number: 26182291.0
(22) Date of filing: 01.06.2026
(51) Int. Cl.: G06Q 10/0635, E21B 43/00, G06Q 50/06

(54) **SYSTEMS AND METHODS FOR MANAGING STORAGE WELLS BASED ON A PROBABILISTIC RISK ASSESSMENT MODEL**

(30) Priority: 04.06.2025 US 202519227584
(71) Applicant: Jana Corporation, Aurora, Ontario L4G 6X7 (CA)
(72) Inventor: LUFF, William, Aurora, ON L4G 6X7 (CA); OLIPHANT, Ken, Aurora, ON L4G 6X7 (CA); SINGH, Jetinder, Aurora, ON L4G 6X7 (CA); WENG, Xiaoyu, Aurora, ON L4G 6X7 (CA)
(74) Representative: Icosa

(57) **Abstract**

Disclosed herein are systems and methods for managing risk of one or more storage wells, the method comprising: obtaining storage well data and well intervention data; determining a risk profile of the one or more storage wells using a probabilistic risk assessment model based on the storage well data and the well intervention data by: determining a baseline operational risk value for each of the one or more storage wells; determining an intervention risk value for each of the one or more storage wells; determining a post-mitigation operational risk value for each of the one or more storage wells; and determining a net mitigated risk value based on the baseline operational risk value, the intervention risk value, and the post-mitigation operational risk value; and producing a graphical output of the risk profile of the one or more storage wells.

## Description

### FIELD OF THE DISCLOSURE

The present disclosure relates to the field of risk analysis systems, and in particular, risk analysis systems for managing storage wells.

### BACKGROUND OF INVENTION

Storage wells are complex assets comprising several unique subcomponents that interact with one another to ensure that their contents are properly secured underground. Natural gas storage wells, in particular, are prevalent in the United States with approximately 17,000 storage wells distributed across the country. There have been 18 storage well incidents reported by the Pipeline and Hazardous Materials Safety Administration (PHMSA) from 2017 to 2021, wherein the incidents ranged from small leaks, large leaks to blowouts. Although the probability of storage well incidents is low, their consequences would be extremely severe if they were to occur. For instance, given the 18 storage well incidents reported by the PHMSA, the cumulative cost related to these events amounted to $32.5 million.

The consequences of incidents involving natural gas storage wells, in particular, are worse than that of natural gas pipelines since storage wells contain up to billions of cubic feet of natural gas underground. A specific notable example of an extensive gas leak from a storage facility is known as the Aliso Canyon gas leak which occurred in Los Angeles, California in 2015. Since over 97 metric tonnes of natural gas were released as a result of the leak, individuals and families in the surrounding communities had to be temporarily evacuated because of severe air quality issues. The consequences of the incident involved health-related, environmental, reputational and legal issues. The aftermath of the incident also led to widespread calls for action to prevent events such as this from occurring again.

In contrast to linear assets such as pipelines used for distribution and transmission, storage wells involve more complexity since they require more careful consideration around geological factors, operational factors (pressure control, well entry, etc.), and regulatory frameworks, among others. Furthermore, federal regulations involving storage wells which are based on American Petroleum Institute (API) Recommended Practice 1171 are less prescriptive than regulations for Distribution Integrity Management Programs (DIMP) and Transmission Integrity Management Programs (TIMP). Consequently, there may be challenges involved when it comes to implementation of the storage well integrity management practices, posing another level of risk especially for achieving consistent outcomes, especially when it comes to health and safety impacts.

Storage wells are generally considered complex assets comprising multiple components that interact with one another to keep large volumes of their contents secured in place. However, having multiple components in a given storage well may also serve as pathways for its contents to be inadvertently released, posing a risk to the regular operation of the storage well. Moreover, not only does the regular operation of storage wells involve a level of risk, but also any intervention performed to manage the risk of storage wells inherently introduces risk to the system as well. As such, systems and methods for effectively managing and evaluating risk associated with operating storage wells are required, serving as a comprehensive tool for operators to prevent and mitigate consequences of storage well failure.

This background information is provided to reveal information believed by the applicant to be of possible relevance. No admission is necessarily intended, nor should be construed, that any of the preceding information constitutes prior art or forms part of the general common knowledge in the relevant art.

### SUMMARY

The following presents a simplified summary of the general inventive concept(s) described herein to provide a basic understanding of some aspects of the disclosure. This summary is not an extensive overview of the disclosure. It is not intended to restrict key or critical elements of embodiments of the disclosure or to delineate their scope beyond that which is explicitly or implicitly described by the following description and claims.

The object of the present disclosure is a system and method for managing one or more storage wells based on a probabilistic risk assessment model. Given that a storage well system comprises multiple components, these components may act as potential release pathways for contents of a given storage well. Therefore, there is a need to model different combinations of the well components to determine risk of various potential release paths. Furthermore, the present disclosure also describes a system and method for managing storage well intervention risk. Since interventions themselves may introduce risk into a storage well system in addition to existing risk associated with its regular operation, there is also a need to understand how different types of interventions contribute to an overall risk of the system, allowing operators to more efficiently manage and mitigate the risks involved.

In accordance with one aspect, there is provided a method for managing risk of one or more storage wells, the method comprising: obtaining storage well data and well intervention (activity) data; evaluating a risk profile of the one or more storage wells using a probabilistic risk assessment model based on the storage well data and the well intervention data by: determining a baseline operational risk value for each of the one or more storage wells; determining an intervention risk value for each of the one or more storage wells; determining a post-mitigation operational risk value for each of the one or more storage wells following performance of one or more mitigation measures on each of the one or more storage wells; and determining a net mitigated risk value based on the baseline operational risk value, the intervention risk value, and the post-mitigation operational risk value; producing a graphical output of the risk profile of the one or more storage wells; and implementing one or more future prevention or mitigation measures for reducing the risk profile of the one or more storage wells.

In some embodiments, the one or more storage wells contain gas or oil.

In some embodiments, the storage well data comprises well configuration data, well construction and completion data, well condition, leak and maintenance records, and operating environment data.

In some embodiments, the storage well data comprises at least one of well configuration data, well construction and completion data, well condition, leak and maintenance records, or operating environment data

In some embodiments, the well intervention data comprises intervention type data, well entry type data, historical intervention records, and intervention planning records.

In some embodiments, the historical intervention records and intervention planning records comprise scheduled and unscheduled historical and planned well interventions.

In some embodiments, the baseline operational risk value is determined by: determining a baseline likelihood of failure of the one or more storage wells based on the storage well data associated with routine operation of the one or more storage wells; determining a baseline consequence of failure of the one or more storage wells in terms of economic, environmental, health, safety, regulatory, and reputational impacts based on severity of well content release and ignition, wherein the severity of well content release comprises type of well content release, size of well content release and duration of well content release; and determining the baseline operational risk value based on the baseline likelihood of failure and the baseline consequence of failure.

In some embodiments, the intervention risk value is determined by: determining an intervention likelihood of failure of the one or more storage wells based on the storage well data and well intervention data; determining an intervention consequence of failure of the one or more storage wells in terms of economic, environmental, health, safety, regulatory, and reputational impacts based on the severity of well content release and ignition; and determining the intervention risk value based on the intervention likelihood of failure and the intervention consequence of failure.

In some embodiments, the post-mitigation operational risk value is determined by: determining a post-mitigation likelihood of failure of the one or more storage wells based on the storage well data and well intervention data following the performance of one or more mitigation measures on each of the one or more storage wells; determining a post-mitigation consequence of failure of the one or more storage wells in terms of economic, environmental, health, safety, regulatory, and reputational impacts based on the severity of well content release and ignition; and determining the post-mitigation operational risk value based on the post-mitigation likelihood of failure and the post-mitigation consequence of failure.

In some embodiments, the risk assessment model comprises a plurality of inputs as point values or distributions of values, wherein the distributions of values are processed using Monte Carlo calculation methods to generate probabilistic outcome distributions.

In some embodiments, the graphical output of the risk profile is illustrated according to subsurface risk, surface risk, risk over time, risk by release outcome, risk by threat, and risk by consequence.

In accordance with another aspect, there is provided a system for managing risk of one or more storage wells, the system comprising: one or more computing devices connected to a server through a network, wherein the server comprises: a memory; and one or more processors coupled to the memory comprising program instructions, wherein the program instructions, when executed, comprises: obtaining storage well data and well intervention (activity) data; evaluating a risk profile of the one or more storage wells using a probabilistic risk assessment model based on the storage well data and the well intervention data by: determining a baseline operational risk value for each of the one or more storage wells; determining an intervention risk value for each of the one or more storage wells; determining a post-mitigation operational risk value for each of the one or more storage wells following performance of one or more mitigation measures on each of the one or more storage wells; and determining a net mitigated risk value based on the baseline operational risk value, the intervention risk value, and the post-mitigation operational risk value; and producing a graphical output of the risk profile of the one or more storage wells, wherein the risk profile is usable to implement one or more future prevention or mitigation measures for reducing the risk profile of the one or more storage wells.

In some embodiments, the one or more storage wells contain gas or oil.

In some embodiments, the storage well data comprises well configuration data, well construction and completion data, well condition, leak and maintenance records, and operating environment data.

In some embodiments, the well intervention data comprises intervention type data, well entry type data, historical intervention records, and intervention planning records.

In some embodiments, the well intervention data comprises at least one of intervention type data, well entry type data, historical intervention records, or intervention planning records.

In some embodiments, the historical intervention records and intervention planning records comprise scheduled and unscheduled historical and planned well interventions.

In some embodiments, the baseline operational risk value is determined by: determining a baseline likelihood of failure of the one or more storage wells based on the storage well data associated with routine operation of the one or more storage wells; determining a baseline consequence of failure of the one or more storage wells in terms of economic, environmental, health, safety, regulatory, and reputational impacts based on severity of well content release and ignition, wherein the severity of well content release comprises type of well content release, size of well content release and duration of well content release; and determining the baseline operational risk value based on the baseline likelihood of failure and the baseline consequence of failure.

In some embodiments, the intervention risk value is determined by: determining an intervention likelihood of failure of the one or more storage wells based on the storage well data and well intervention data; determining an intervention consequence of failure of the one or more storage wells in terms of economic, environmental, health, safety, regulatory, and reputational impacts based on the severity of well content release and ignition; and determining the intervention risk value based on the intervention likelihood of failure and the intervention consequence of failure.

In some embodiments, the post-mitigation operational risk value is determined by: determining a post-mitigation likelihood of failure of the one or more storage wells based on the storage well data and well intervention data following the performance of one or more mitigation measures on each of the one or more storage wells; determining a post-mitigation consequence of failure of the one or more storage wells in terms of economic, environmental, health, safety, regulatory, and reputational impacts based on the severity of well content release and ignition; and determining the post-mitigation operational risk value based on the post-mitigation likelihood of failure and the post-mitigation consequence of failure.

In some embodiments, the risk assessment model comprises a plurality of inputs as point values or distributions of values, wherein the distributions of values are processed using Monte Carlo calculation methods to generate probabilistic outcome distributions.

In some embodiments, the graphical output of the risk profile is illustrated according to subsurface risk, surface risk, risk over time, risk by release outcome, risk by threat, and risk by consequence.

Other aspects, features, and/or advantages will become more apparent upon reading of the following non-restrictive description of specific embodiments thereof, given by way of example only with reference to the accompanying drawings.

### BRIEF DESCRIPTION OF THE DRAWINGS

Several embodiments of the present disclosure will be provided, by way of examples only, with reference to the accompanying drawings, wherein:
FIG. 1 is a circular flow chart illustrating a framework for managing risk relating to one or more storage wells in accordance with one embodiment;
FIG. 2 is an illustration of a probabilistic approach to determine various types of risk for each given threat in accordance with one embodiment;
FIG. 3 describes a method for managing one or more storage wells in accordance with one embodiment;
FIG. 4 illustrates a general overview of a process of configuring a probabilistic risk assessment model to determine a risk profile for one or more storage wells in accordance with one embodiment;
FIG. 5 describes a method for managing risk of one or more storage wells with regard to discrete gas release paths in accordance with one embodiment;
FIG. 6 describes a method for determining a risk profile resulting from one or more interventions applied to one or more storage wells in accordance with one embodiment;
FIG. 7A is a bar chart illustrating a baseline risk per projection year associated with an overall storage well system in accordance with one embodiment;
FIG. 7B is a bar chart illustrating a baseline risk per projection year associated with individual storage wells in accordance with one embodiment;
FIG. 7C is a bar chart illustrating baseline risk by type of release outcome per projection year associated with an overall storage well system in accordance with one embodiment;
FIG. 7D is a bar chart illustrating a baseline risk by type of consequence associated with exemplary individual storage wells in accordance with one embodiment;
FIG. 7E is a graph presenting total risk per well associated with a storage well system in accordance with one embodiment;
FIG. 7F is a graph presenting major event risk per well associated with a storage well system in accordance with one embodiment;
FIG. 7G is a bar chart illustrating risk before and after applying an intervention into a storage well system in accordance with one embodiment; and
FIG. 8 is a schematic diagram of a computer system used to determine a risk profile of one or more storage wells in accordance with one embodiment.

### ILLUSTRATIVE EMBODIMENTS

Various implementations and aspects of the specification will be described with reference to details discussed below. The following description and drawings are illustrative of the specification and are not to be construed as limiting the specification. Numerous specific details are described to provide a thorough understanding of various implementations of the present specification. However, in certain instances, well-known or conventional details are not described in order to provide a concise discussion of implementations of the present specification.

Furthermore, numerous specific details are set forth in order to provide a thorough understanding of the implementations described herein. However, it will be understood by those skilled in the relevant arts that the implementations described herein may be practiced without these specific details. In other instances, well-known methods, procedures and components have not been described in detail so as not to obscure the implementations described herein.

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

When it comes to the integrity management of storage wells, especially natural gas storage wells, operators may be faced with several challenges, including how interventions themselves introduce risk associated with the overall storage well system comparable to the risk associated operating the wells themselves. Although the risk associated with well interventions may be in the same order of magnitude as risk associated with the regular operation of the storage wells, existing approaches do not explicitly consider well intervention risk. As such, there is a need for a solution in order for operators to quantify the risk involved with these interventions and how it affects the overall risk associated with the overall well storage system.

The systems and methods disclosed herein aim to help operators understand risk associated with storage wells, including risk associated with discrete gas release paths and well intervention activities. Regarding the discrete gas release paths, the likelihood of failure of each unique well component is determined and risk associated with combinations of the various unique well components is forecasted within a given storage well system. Existing approaches often fail to adequately differentiate risk between storage wells to properly consider the unique configuration and nature of their constituent components. The approach described in the present disclosure is an effective and more resilient way to model and manage storage integrity risk in a complex storage well system, taking into account the likelihood and magnitude of potential gas releases while considering the well configuration, well condition, and impact of each of the constituent components. For example, findings of corrosion pitting on a production casing can be accounted for using this approach. Furthermore, this approach provides operations to receive actionable information and identify risk differentiation between wells in a given storage well system, allowing them to better target and prioritize their integrity management activities.

Understanding discrete gas release paths within a storage well system further applies an understanding of various physical mechanisms that drive potential well failures. This is key to effectively model storage risk. Given the small number of gas storage wells and low reported incident rates of these assets, the volume of available data cannot fully support alternative approaches that lean more heavily on data mining unlike other assets (e.g., distribution and transmission assets) that operators of storage wells may also manage.

As for the intervention activities, the present disclosure also includes forecasting risk of performing a given intervention on a given well, and forecasting the total risk associated with an operator's planned intervention activities, wherein the planned intervention activities may comprise scheduled and potential follow-up or unscheduled well interventions. In order to achieve these objectives, specific well intervention risk models have been developed as part of a larger framework for forecasting risk associated with one or more storage wells. In addition to forecasting intervention risk in isolation, the systems and methods disclosed herein also contextualizes risk of potential intervention activities against a baseline operational risk (risk associated with regular operation of a storage well in its current state) and an operational risk following the intervention (risk associated with the regular operation of a storage well after the intervention is performed). The aforementioned features ultimately allow operators to consider the value of well intervention activities on a risk-optimized basis.

Furthermore, the systems and methods disclosed herein provide operators with a credible path to regulatory compliance. On one end, having a robust risk management approach aligning with best practices as defined by the federal regulatory body governing the operation and management of underground natural gas storage facilities in the United States is required. On another end, considering well intervention risk has also been required by these recently adopted regulations. Compared to legacy practices, the integrity management practices required by the recently adopted regulations require a more robust and comprehensive approach to risk modelling as it requires various factors to be considered in a given storage well risk model.

The present disclosure discusses approaches to model risk for natural gas storage wells. However, the approaches as described herein may also be applicable to other storage wells and complex infrastructure where activities to manage risk may themselves introduce risk. Applications may include immediate adjacent applications such as offshore oil and gas wells to more distinct applications such as electrical or logistics and supply chain infrastructure.

The regular operation of storage wells and storage well interventions are distinct terms as described herein. The regular operation of storage wells includes, but is not limited to, injection and withdrawal of natural gas as well as regular monitoring activities that are passively measured through built-in sensors within the storage well system. The regular monitoring activities may comprise monitoring pressure, volume, temperature, flow rates, and geological activities within the surrounding area of the storage wells. Conversely, storage well interventions refer to activities outside the scope of the regular operation of storage wells that require one or more physical interactions with a storage well system. Examples of storage well interventions may comprise corrosion logging, tubing installation, safety valve installation, well plugging or abandonment. These storge well interventions are also associated with a variety of well entry types such as coiled tubing, workover, wireline, and snubbing, among others.

Furthermore, storage well interventions may be scheduled or unscheduled, wherein the unscheduled interventions may be associated with follow-up activities or activities due to an emergency. Each intervention activity is also unique to each storage well, accounting for the specific configuration, condition, and operating environment of each storage well. For example, a storage well with an annual pressure monitoring system installed will have a lower risk associated with unscheduled interventions.

Different intervention types are also considered discretely in modelling risk for storage wells, which reflect the differences in physical interactions with the storage wells associated with each intervention type. For example, corrosion logging may require a wireline well operation, while installing tubing may be performed through a coiled tubing operation. The aforementioned examples describe different well entry operations and in turn, carry different risks. The systems and methods described herein account for these differences.

Probabilistic risk assessment models as described herein further apply an outcome-based approach to forecasting risk. A well failure may have various end results, ranging from the release of a small amount of gas, to a large leak that ignites, to a complete blowout that explodes, resulting in detrimental effects that may last for months. These outcomes are markedly different and are required to be considered separately from each other. By discretely modelling each scenario considering each outcome type, their likelihood of occurrence, and the consequences should they occur, the present disclosure allows operators with the necessary solution to manage various possible outcomes.

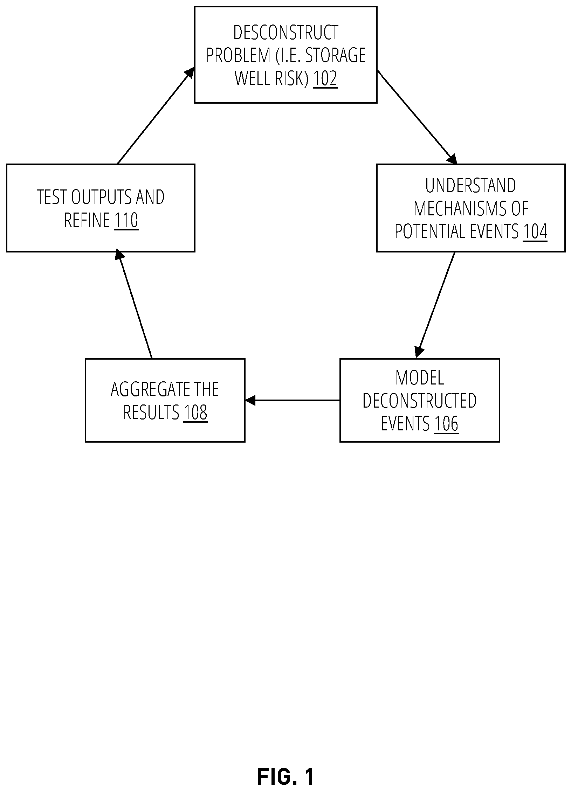

FIG. 1 is a circular flow chart illustrating a framework for managing risk relating to one or more storage wells in accordance with one embodiment. The overall framework serves as a basis for determining risk associated with discrete gas release paths and interventions associated with the one or more storage wells. More specifically, the overall framework is based on a mechanistic deconstruction of modelling risk. In this case, storage well risk is first deconstructed into different constituents at step 102. Once deconstructed, the mechanisms underlying each potential event associated with the different constituents are understood at step 104 before modelling the deconstructed constituents at step 106 and aggregating the deconstructed constituents 108 against observations before testing and refining the outputs at step 110 to determine the storage well risk. Once the outputs are tested and refined, other types of storage well risk may be determined as necessary which would follow the same framework.

Risk as described herein can be defined as the likelihood of failure multiplied by the consequence of failure. Risk may also be presented in terms of a monetary amount, reflecting a potential financial impact that an operator may face if there is a failure in the storage well system. In addition, risk as described herein is modelled on a per-well basis. However, an overall risk profile for one or more groups of wells (e.g., all wells in a well storage field) may be presented to the operator by aggregating the single well risk measures.

When it comes to the structure of the framework for determining storage well risk, the two main aspects that are considered are the likelihood of failure and the consequences of failure. In this case, various scenarios are taken into account to determine the risk of failure for storage wells. Specifically, each discrete failure scenario is formed by a unique combination of threats and consequences. By way of non-limiting examples, the threats may comprise corrosion and seismic activity such as earthquakes, while the consequences may comprise the magnitude of gas release and downstream effects after gas release such as fires and explosions.

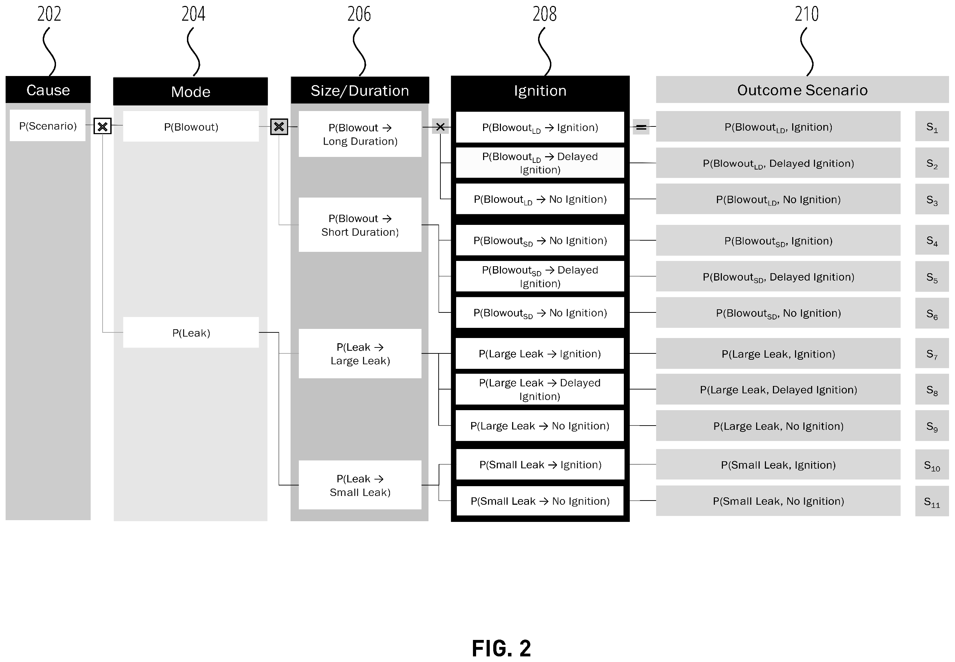

FIG. 2 is an illustration of a probabilistic approach to determine various types of risk for each given threat in accordance with one embodiment. In this approach, the probabilities of each consideration are determined, ultimately leading to an evaluation of each outcome scenario in terms of risk in monetary value. For a given threat or cause 202, different modes of gas release 204 are determined whether it is a blowout or a leak. Then, for each mode of gas release 204, the size and duration of the gas release 206 is determined. For instance, whether the blowout lasts for a long duration or short duration, and whether the leak involves a large leak, medium leak, or small leak. Once the size and duration of the gas release 206 is determined, the type of ignition outcome 208 for each gas release outcome is determined. The types of ignition outcomes 208 may range from definite ignition, delayed ignition or lack of ignition. As a result, various outcome scenarios 210 are determined for each given threat. In this case, 11 different outcome scenarios are modelled for one given threat associated with an asset such as a natural gas storage well. The probabilities of a threat or cause, mode of gas release, size and duration of gas release, and type of ignition outcome are multiplied in order to determine the probabilities of each outcome scenario.

One of the benefits of the probabilistic approach is when it comes to comparing risk values, the actions that need to be taken by the operator to mitigate the risk are made clear. For example, in case there are two risk values amounting to $1000 each, it would be made clear to the operator to attribute a different mitigation strategy and action to a low consequence event involving a small leak compared to a low probability event involving a major blowout.

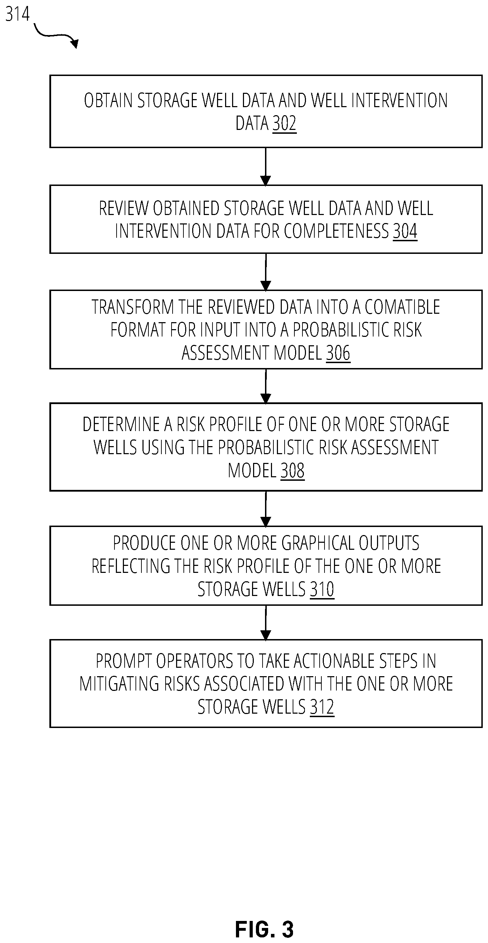

FIG. 3 describes a method 314 for managing one or more storage wells in accordance with one embodiment. Prior to determining risk, storage well data and storage well intervention data are obtained at step 302 from an operator. Storage well data may comprise data relating to well configuration, condition, age, construction, completion, leak and maintenance records, as well as data relating to the operating environment of a given well or group of wells. As for the storage well intervention data, it may comprise intervention types, well entry types, historical intervention records, and intervention planning records. In some embodiments, the storage well intervention data may comprise at least one of intervention types, well entry types, historical intervention records, or intervention planning records. The historical intervention records and intervention planning records may further be subdivided into scheduled and/or unscheduled interventions. Although the available well entry types associated with well interventions may be the same regardless of whether interventions are scheduled or unscheduled, the likelihood of a given type of well entry may be different. For example, an operator may choose to perform a riskier type of well entry for a well-planned intervention scheduled in advance, but choose to perform a safer, low-risk type of well entry for an unplanned intervention.

Once storage well data and storage well intervention data are obtained at step 302, all the data is reviewed for completeness at step 304 and quality. If necessary, the data is supplemented by collecting further storage well data and storage well intervention data from the operator or using third-party data. For example, U.S. census data may be used to determine the population around one or more storage wells. The reviewed data is then transformed into a compatible format that can be used as input in the probabilistic risk assessment model at step 306. The probabilistic risk assessment model aims to produce useful information for an operator to understand the risks involved with one or more storage wells. As such, a risk profile of one or more storage wells is determined using the probabilistic risk assessment model at step 308. One or more graphical outputs reflecting the risk profile of one or more storage wells are produced at step 310 for operators to be prompted to take actionable steps in managing and mitigating the risks associated with their assets at step 312.

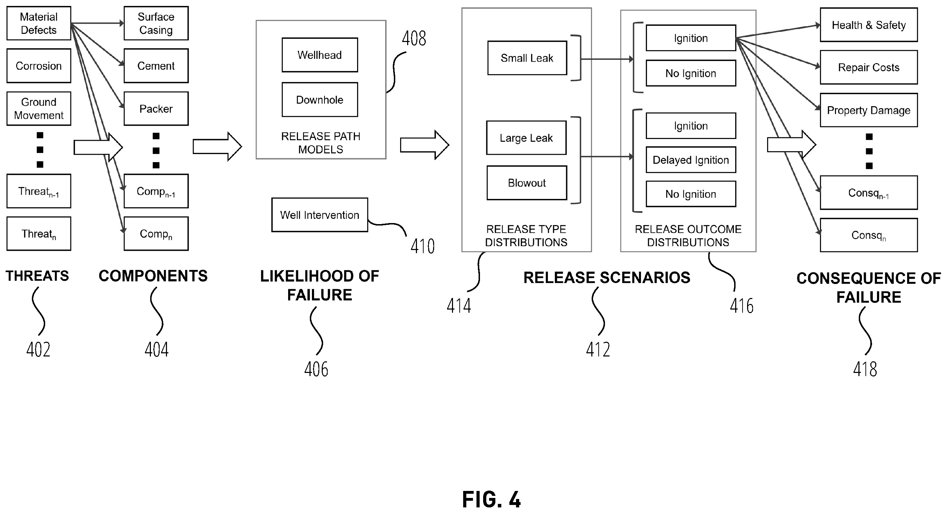

FIG. 4 illustrates a general overview of a process of configuring a probabilistic risk assessment model to determine a risk profile for one or more storage wells in accordance with one embodiment. The probabilistic risk assessment model first considers threats that may act on each component a given storage well by identifying each potential threat (e.g., material defects, corrosion and ground movement) 402 for each component (e.g., surface coating, cements and packers) 404. In addition to identifying each component of the given storage well, the configuration of the components relative to each other is also considered to determine the interaction of the threats to each component that may lead to failure of the storage well, which may be evidenced by gas release. Furthermore, the inputs into the probabilistic risk assessment model may be in the form of point values or distributions of values, wherein the distribution of values may be processed using Monte Carlo calculation methods to generate probabilistic outcome distributions.

Once the threats 402 are identified for each well component 404, the likelihood of failure 406 for the storage well is determined based on each well's construction, wherein the likelihood of failure is associated with gas release through discrete release paths 408. The likelihood of failure may also be the probability of gas release due to well interventions 410. One notable feature of considering well interventions in the probabilistic risk assessment model is that although the interventions are mainly introduced to reduce risk, these interventions may also add another level of risk to the well storage system.

Different failure outcomes or release scenarios 412, including gas release or well content release severity and ignition outcomes, are then determined based on the likelihood of failure 406, wherein the failure outcomes or release scenarios 412 comprise release type distributions (small leak, large leak or blowout) 414 and release outcome distributions (ignition, delayed ignition or no ignition) 416. After determining the different gas release outcomes, consequences of failure 418 are modelled, wherein the consequences are separated into different categories that may range from health and safety costs due to injuries or fatalities, environmental impacts, regulatory fines, reputational damage, property damage, as well as repair and rehabilitation costs. Other downstream impacts such as loss of function or loss of containment may also be considered in the model.

Overall, the probabilistic risk assessment model flows in such a way that it discretely models both risks associated with gas release paths and well interventions. A risk profile that holistically provides an overview of a given storage well or a group of storage wells may be generated in order for an operator to make decisions and/or take action to mitigate any projected risks associated with the assets. By understanding both discrete gas release paths in a storage well system and well intervention risk, operators may find a net benefit over multiple years despite the operational risks associated with the storage well system.

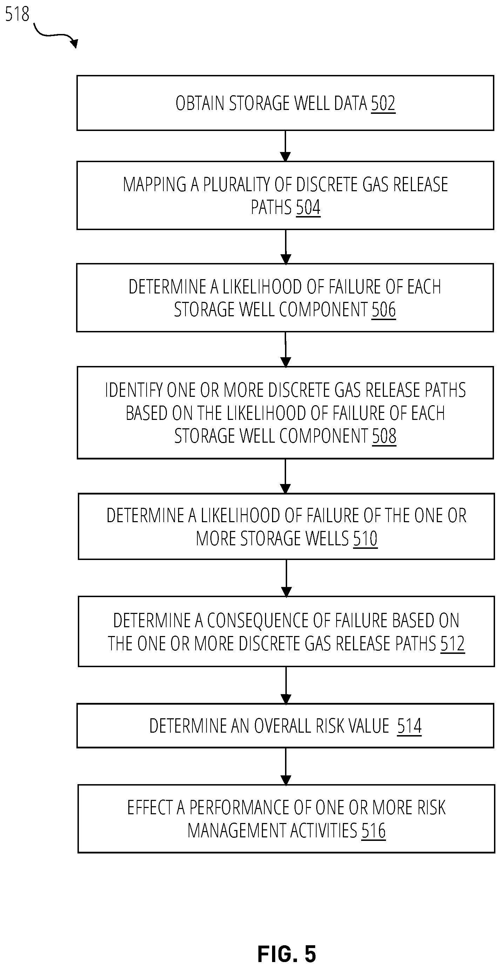

FIG. 5 describes a method 518 for managing risk of one or more storage wells with regard to discrete gas release paths in accordance with one embodiment. Storage well data is first obtained at step 502 before mapping a plurality of discrete gas release paths at step 504 and determining determine a likelihood of failure of each storage well component at step 506. One or more gas release paths are identified based on the likelihood of failure of each storage well component and any combination of these components at step 508 Following step 508, a likelihood of failure of the one or more storage wells is determined at step 510 by aggregating the one or more discrete gas release paths. A consequence of failure is then determined based on one or more potential gas release paths at step 512 prior to determining an overall risk value for each of the one or more discrete gas release paths based on the likelihood of failure of the one or more storage wells and the consequence of failure of the one or more storage wells at step 514. Based on the overall risk values, an operator may be prompted to effect a performance of one or more risk management activities at step 516 such as prioritizing mitigation measures and establishing contingency plans in order to reduce the risk of operating the one or more storage wells.

One of the complexities of the probabilistic risk assessment model is that it accounts for the multi-barrier configuration of a storage well where potential gas release paths are modelled based on different combinations of storage well components, both above ground and below ground. Examples of main components of a natural gas storage well comprise a wellhead and subsurface components. The wellhead and general above ground assembly may comprise a plurality of valves (e.g., crown valve, wing valve, choke valve, master valve, etc.), a tubing head adapter, a casing head, a plurality of seals (e.g., a tubing head neck seal, a production casing hanger seal, intermediate casing seal, etc.), and a plurality of ports and flanges, among others. The subsurface components may comprise packers (e.g., production packer), tubings, liners, barriers, a sliding sleeve, a slip joint, a plurality of casings (e.g., surface casing, intermediate casing, production casing), and a plurality of cements (e.g., surface casing cement, intermediate casing cement, production casing cement), among others. Other components may comprise associated appurtenances and instrumentation. Given that the different components work in concert to contain vast volumes of gas under pressure to supply gas transmission infrastructure, it is important to account for each component to be considered in the probabilistic risk assessment model in order to accurately understand the risk associated with operating storage wells. Having an understanding of the impact of the likelihood of failure of each component in such a complex system of interacting components further allows the probabilistic risk assessment model to forecast the likelihood and magnitude of gas release from the storage well system as a whole.

In case that the collected data is lacking, knowing the structure and configuration of the wellhead and subsurface components is one of the ways to get around limited data provided for storage wells. An understanding of the physical components that may lead to gas release from the system and the factors that may cause the gas release may be required to be determined for each well in a storage well system for a given operator. When the discrete gas release paths are determined by using the probabilistic risk assessment model, the outputs are validated by comparing them with observations and/or reviewing them with subject-matter experts.

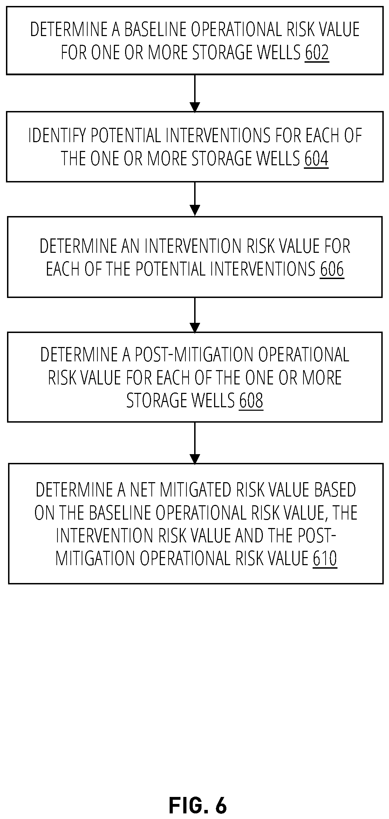

FIG. 6 describes a method 612 for evaluating a risk profile resulting from one or more interventions applied to one or more storage wells in accordance with one embodiment. First, a baseline operational risk value for the one or more storage wells is determined at step 602. Potential interventions for each of the one or more storage wells are then identified at step 604 prior to determining a corresponding intervention risk value for each of the identified potential interventions at step 606. A post-mitigation operational risk value for each of the one or more storage wells is determined at step 608. Finally, a net mitigated value is determined based on the baseline operational risk value, the intervention risk value, and the post-mitigation operational risk value 610. Adjustments may also be additionally made to any inputs as necessary.

Baseline operational risk is determined by considering various factors that influence the likelihood of failure for a storage well and the consequences of failure. Some exemplary factors that influence the likelihood of failure may comprise well configuration (e.g., number of casings, diameter of casings, etc.), well condition from maintenance or corrosion records, and the operating environment, wherein the operating environment considers factors such as accessibility, proximity to nearby populations or infrastructure, and soil acidity, among others. Moreover, exemplary consequences may comprise the volume of gas release, health and safety impacts to nearby populations, and damage to infrastructure.

Post-intervention risks are modelled by adjusting the values associated with the same set of attributes as that of the baseline operational risk. For example, if the repair of a storage well with observed corrosion is modelled, corrosion-related input factors may be adjusted to reflect the work performed. As such, the risk value would be a result of recalculating the initial risk using the updated input factors.

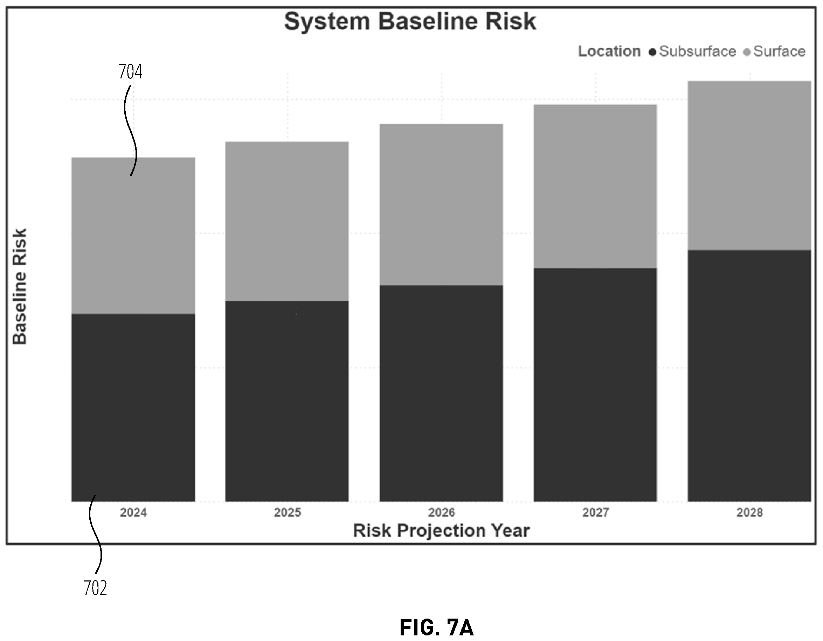

FIG. 7A to FIG. 7G illustrate exemplary graphical outputs of risk profiles for one or more storage wells. For an operator to maximize the benefit of the storage well probabilistic risk assessment model, a holistic risk profile of one or more storage wells is visualized. In this case, the likelihood of failure and consequence of failure of each asset are used to determine risk. Risk profiles may be generated for each storage well, a group of storage wells in a storage well field or across an entire storage well system that an operator handles. By depicting different views of risk profiles across different assets, an operator may compare the risk associated with multiple storage wells or storage well fields to more effectively manage them. In some embodiments, the graphical outputs of the risk profiles may be illustrated according to subsurface risk, surface risk, risk over time, risk by release outcome, risk by threat, and/or risk by consequence.

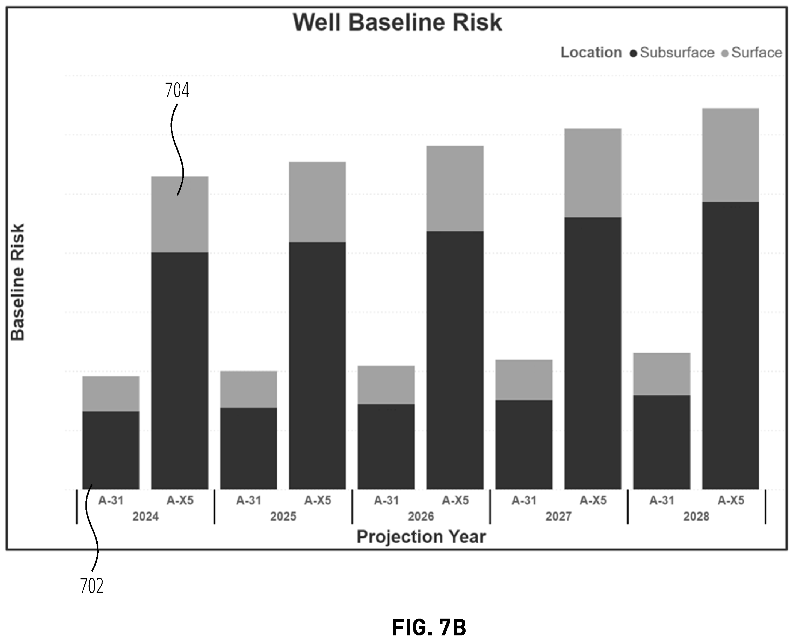

FIG. 7A and FIG. 7B are bar charts illustrating a baseline risk per projection year associated with an overall storage well system and individual storage wells, respectively, in accordance with one embodiment. Both bar charts further localize the baseline risk associated with the above surface 704 and subsurface components 702 of the storage wells. In some embodiments and as shown in the exemplary charts, baseline risk associated with the subsurface components 702 are more significant compared to that associated with above surface components 704. The baseline risk projection of the storage wells also increases year after year, which is in line with the expected outcome given the regular operation of the storage wells without any further mitigations. By comparing the storage wells shown in FIG. 7B, an operator may also be informed that well A-31 is associated with a lower baseline risk compared to well A-X5.

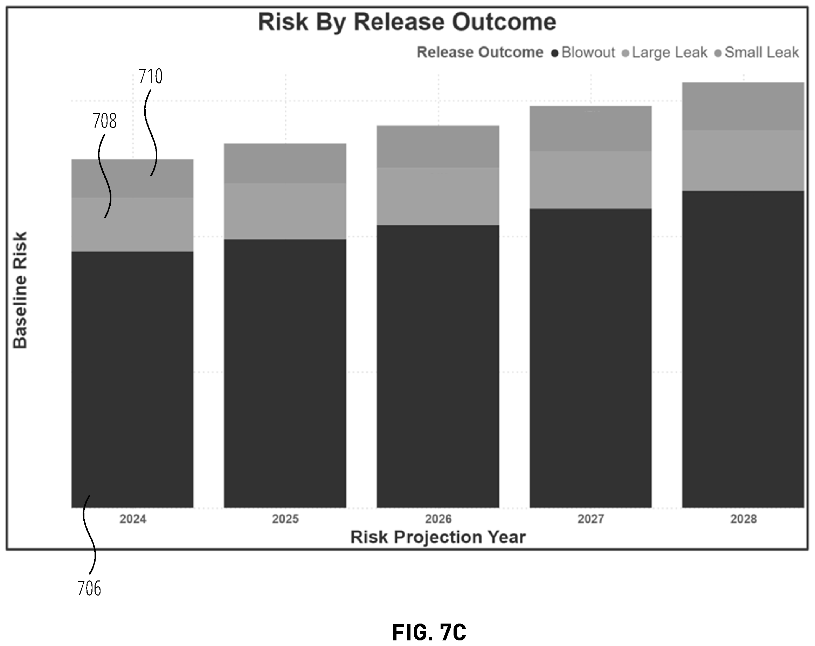

FIG. 7C is a bar chart illustrating baseline risk by type of release outcome per projection year associated with an overall storage well system. The type of release outcome (small leak 710, large leak 708 or blowout 706) is distinctly presented in order for an operator to understand risk associated with their assets in more detail. Given a monetary amount associated with the overall risk in the system, having these measures allows the operator to attribute a subset of the total amount to each type of release outcome.

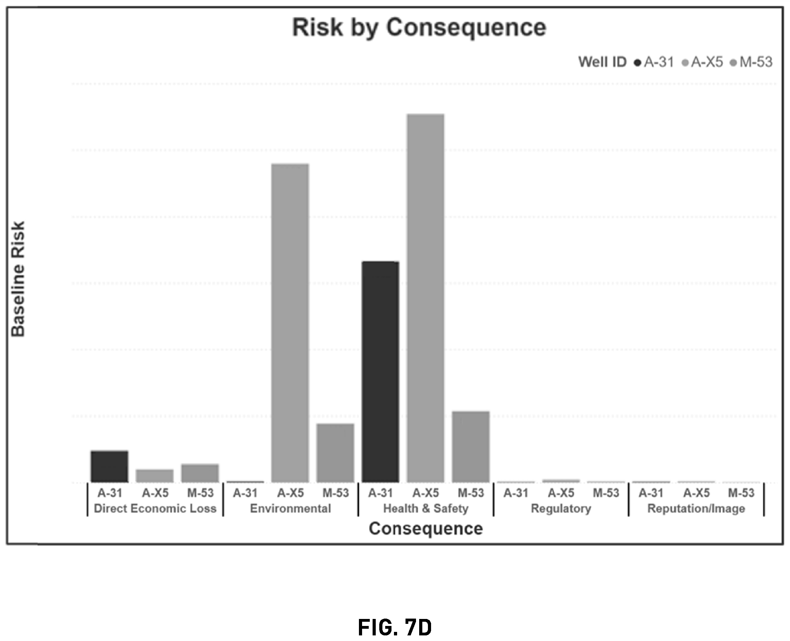

In addition, FIG. 7D is a bar chart illustrating a baseline risk by type of consequence associated with exemplary individual storage wells (A-31, A-X5, M-53). The different types of consequences as shown include direct economic loss, environmental impacts, health and safety impacts, regulatory impacts and reputation/image impacts. This chart allows an operator to further attribute risk depending on different types of consequences for a given storage well and compare it with other storage wells. In some embodiments, the risk profile may also present a baseline risk by type of threat. By breaking down the overall risk associated with one or more storage wells, operators may ultimately focus on the strategies, decisions and actions required for an individual well or a group of wells to best optimize their budgets set to manage risk in a given year.

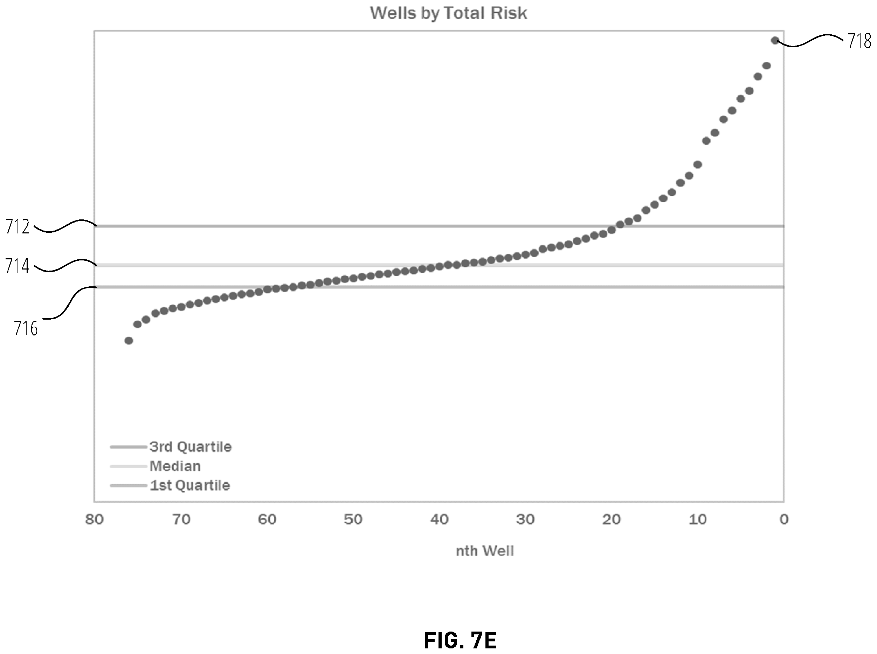

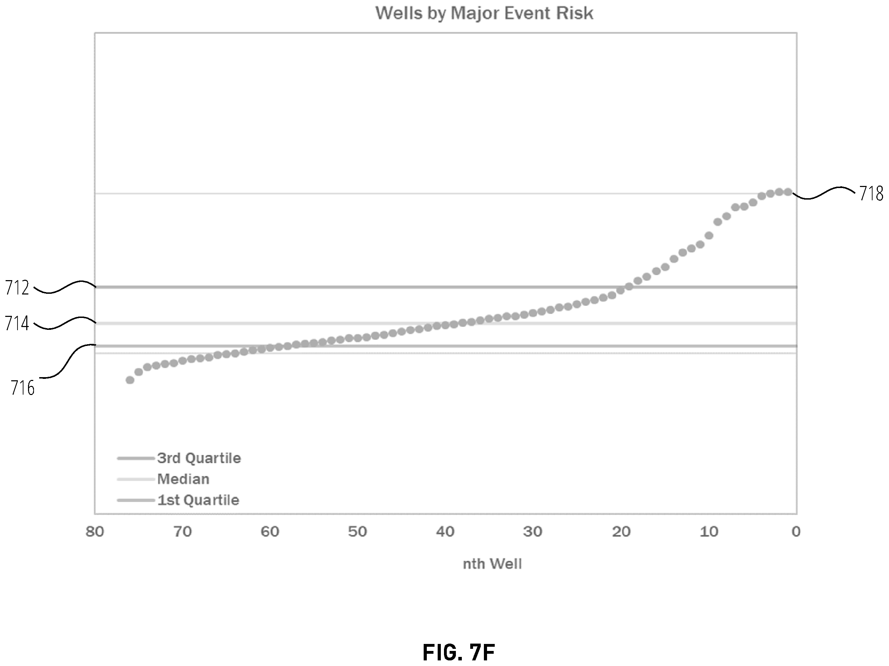

The risk profile of one or more storage wells may also be further separated by total risk or by major event risk in a given storage well system as shown in FIG. 7E and FIG. 7F, respectively. Statistical measures showing the first quartile 716, median 714 and third quartile 712 in each figure are also shown to describe the spread of the various exemplary data points 718. Visualizing both depictions allows operators to understand not only the total risk in a given storage well system but also understand how much of the total risk is attributed to major events (e.g., blowouts), costing significant health and safety, environmental, economic, regulatory and legal impacts to operators and individuals who may reside near the storage well system.

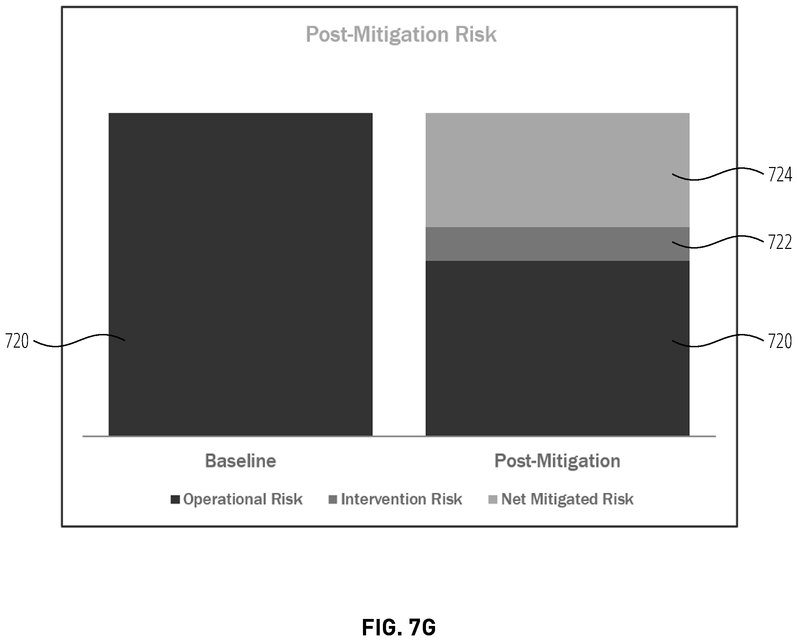

As illustrated in FIG. 7G, post-mitigation risk may also be determined based on the storage well probabilistic risk assessment model. In this case, baseline operational risk and post-mitigation operational risk 720, intervention risk 722, and net mitigated risk 724 are presented to demonstrate an exemplary scenario of a substantial reduction of overall risk in a storage well system along with minimal increase in risk due to the intervention itself. As described herein, activities performed to manage storage well risk (i.e., well interventions) inherently introduce risk. As such, new risk is always introduced whenever an operator performs an intervention to reduce an initial baseline risk associated with a storage well system. The risks and benefits of intervention activities are also contextualized for operators to make sound decisions regarding whether to proceed with a given intervention. On one end, there may be a net benefit over a given assessment time frame if the risk reduced by mitigation measures is larger than the risk introduced by the mitigation measures themselves. On the other end, if the risk introduced by mitigation measures themselves is larger than the reduction of risk due to these mitigation measures, operators may decide that it may not be worth performing a given intervention.

In some embodiments, charts showing before and after views of preventative measures may also be presented to operators. In order to account for any preventative or mitigation measures, operators may adjust input parameters in a software run by a computing device that has implemented the probabilistic risk assessment model to determine their impacts on storage well risk. For example, using the software, an operator may view the impact of installing a safety valve on a storage well, including the risk of installation and the risk reduced during operation after the safety valve is installed. In some embodiments, the software may further provide suggested alternative future preventative or mitigation measures to operators that may result in a higher magnitude of risk reduction for storage wells. In some embodiments, the net mitigated risk 724 may also be evaluated over a period of time for tracking purposes.

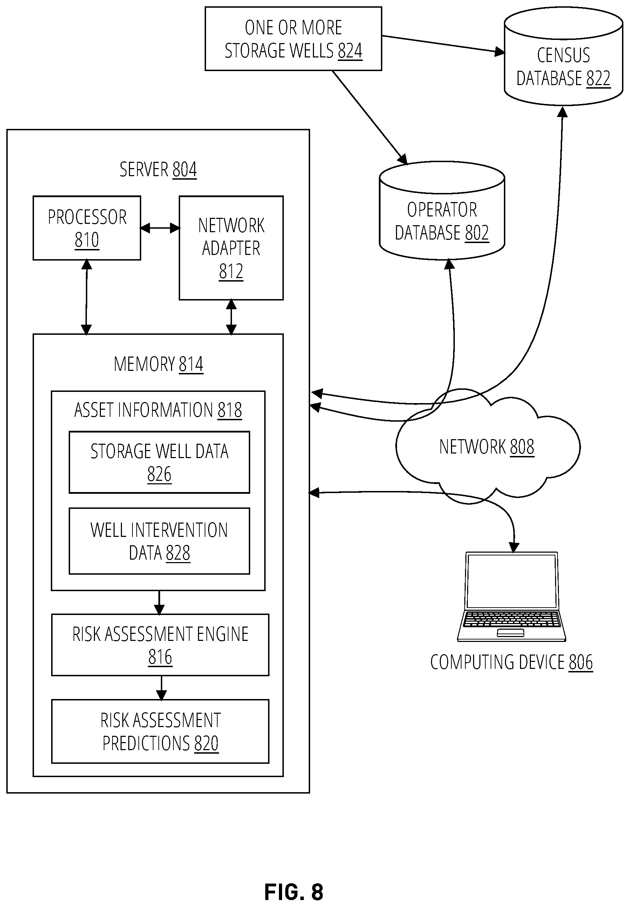

FIG. 8 is a schematic diagram of a computer system used to determine a risk profile of one or more storage wells 824 in accordance with one embodiment. The system includes data sets stored in an operator database 802 or a census database 822. The data sets may comprise storage well data 826 and well intervention data 828. Storage well data (i.e., asset information 818) may comprise data relating to well configuration, condition, age, construction, completion, leak and maintenance records, as well as data relating to the operating environment of a given well or group of wells. In some embodiments, the storage well data may comprise at least one of well configuration data, well construction data, well completion data, well condition data, leak records, maintenance records, or operating environment data. As for the storage well intervention data, it may comprise intervention types, well entry types, historical intervention records, and intervention planning records. In some embodiments, the storage well intervention data may comprise intervention types, well entry types, historical intervention records, or intervention planning records. The historical intervention records and intervention planning records may further be subdivided into scheduled and/or unscheduled interventions. The operator database 802 and the census database 822, along with one or more computing devices 806 are connected to a server 804 though a cloud computing network 808, wherein the connection between the databases 802, 804 and computing device 806 are facilitated by a network adapter 812. An operator may use the computing device 806 operating a software based on a probabilistic risk assessment model to obtain storage well data 826 and well intervention data 828 from one or more of the databases 802, 804 to generate risk assessment predictions 820 based on the likelihood of failure and the consequence of failure of one or more storage wells 824. The memory 814 is configured to receive a plurality of data inputs from at least one data set from the databases 802, 804 relating to asset information 818. In this case, asset information 818 relates to information about the one or more storage wells 824, specifically storage well data 826 and well intervention data 828. Furthermore, the memory 814 may comprise program instructions within the risk assessment engine 816, that when executed by the processor 810, determines risk assessment predictions 820 from the asset information 818. The program instructions also take into account a probabilistic risk assessment model trained on a plurality of different types of data relating to storage wells. Furthermore, the computing device 806 comprises a display component such as an LCD (liquid crystal display) monitor, for displaying information relating to the software to an operator or other user. In some embodiments, the computer system may also comprise multiple processors.

The steps of the methods described herein may be achieved via an appropriate programmable processing device that executes software, or stored instructions. In general, physical processors and/or machines employed by embodiments of the present disclosure for any processing or evaluation may include one or more networked or non-networked general purpose computer systems, microprocessors, field programmable gate arrays (FPGA's), digital signal processors (DSP's), micro-controllers, and the like, programmed according to the teachings of the exemplary embodiments discussed above and appreciated by those skilled in the computer and software arts. Appropriate software can be readily prepared by programmers of ordinary skill based on the teachings of the exemplary embodiments, as is appreciated by those skilled in the software arts. In addition, the devices and subsystems of the exemplary embodiments can be implemented by the preparation of application-specific integrated circuits, as is appreciated by those skilled in the electrical arts. Thus, the exemplary embodiments are not limited to any specific combination of hardware circuitry and/or software.

Stored on any one or a combination of computer readable media, the exemplary embodiments of the present disclosure may include software for controlling the devices and subsystems of the exemplary embodiments, for driving the devices and subsystems of the exemplary embodiments, for processing data and signals, for enabling the devices and subsystems of the exemplary embodiments to interact with a human user or the like. Such software can include, but is not limited to, device drivers, firmware, operating systems, development tools, applications software, and the like. Such computer-readable media further can include the computer program product of an embodiment of the present disclosure for preforming all or a portion (if processing is distributed) of the processing performed in implementations. Computer code devices of the exemplary embodiments of the present disclosure can include any suitable interpretable or executable code mechanism, including but not limited to scripts, interpretable programs, dynamic link libraries (DLLs), complete executable programs and the like.

Common forms of computer-readable media may include, for example, magnetic disks, flash memory, RAM, a PROM, an EPROM, a FLASH-EPROM, or any other suitable memory chip or medium from which a computer or processor can read.

Embodiments of the subject matter described in this specification can be implemented in a computing system that includes: a front end component (e.g., a client computer having a graphical user interface or a Web browser through which a user can interact with an implementation of the subject matter described herein); or a middleware component (e.g., an application server); or a back end component (e.g., a data server); or any combination of one or more such back end, middleware, or front end components. The components of the system can be interconnected by any form or medium of digital data communication, e.g., a communication network. Non-limiting examples of communication networks include a local area network ("LAN") and a wide area network ("WAN").

The computing system can include clients and servers. A client and server are generally remote from each other and typically interact through a communication network. The relationship between client and server arises by virtue of computer programs running on the respective computers and having a client-server relationship with each other.

Generally, storage wells are known to be such complex assets that finding an effective way to accurately model and manage their risk would represent a significant challenge. As such, there is a need for a solution to better understand the risks involved in operating these assets. The present disclosure provides a tool that allows storage well risk to be modelled in a comprehensive manner. In particular, systems and methods disclosed herein account for a plurality of factors comprising different well interventions, the physical effect of the interventions to the operation of the storage wells, different storage well characteristics (e.g., age, condition, configuration, operating environment), possibility of unscheduled well assessments and reassessments outside of scheduled interventions, different failure outcomes (e.g., gas release severity and ignition outcomes), and presentation of intervention risk in a manner that is useful for the management of storage risk (e.g., contextualizing intervention risk with baseline and post-intervention operational risks).

In addition, systems and methods disclosed herein also account for a plurality of factors to design an effective approach to model risk at the subcomponent level of storage wells. Some of the plurality of factors required to forecast an accurate overall risk at the level of the well comprise an understanding of the structure, configuration, condition, age, and operating environment of a given storage well, an understanding of physical mechanisms of component failure (e.g., corrosion on a casing of a given material), an understanding of interactive failures between multiple components. The probabilistic risk assessment model is also implemented in a software for use by storage well operators. Implementation of the model is further designed to be resilient to limited data availability, which may typically be the case for storage well assets. In this case, the model is not solely trained on available data but also considers physical mechanisms of component failure.

While the present disclosure describes various embodiments for illustrative purposes, such description is not intended to be limited to such embodiments. On the contrary, the applicant's teachings described and illustrated herein encompass various alternatives, modifications, and equivalents, without departing from the embodiments, the general scope of which is defined in the appended claims. Information as herein shown and described in detail is fully capable of attaining the above-described object of the present disclosure, the presently preferred embodiment of the present disclosure, and is, thus, representative of the subject matter which is broadly contemplated by the present disclosure.

## Claims

1. A method for managing risk of one or more storage wells, the method comprising:
obtaining storage well data and well intervention data;
evaluating a risk profile of the one or more storage wells using a probabilistic risk assessment model based on the storage well data and the well intervention data by:
determining a baseline operational risk value for each of the one or more storage wells;
determining an intervention risk value for each of the one or more storage wells;
determining a post-mitigation operational risk value for each of the one or more storage wells following performance of one or more mitigation measures on each of the one or more storage wells; and
determining a net mitigated risk value based on the baseline operational risk value, the intervention risk value, and the post-mitigation operational risk value;
producing one or more graphical outputs of the risk profile of the one or more storage wells; and
implementing one or more future prevention or mitigation measures for reducing the risk profile of the one or more storage wells.

2. The method of claim **1,** wherein the storage well data comprises at least one of well configuration data, well construction and completion data, well condition, leak and maintenance records, or operating environment data.

3. The method of any one of claims 1 or 2, wherein the well intervention data comprises at least one of intervention type data, well entry type data, historical intervention records, or intervention planning records, wherein the historical intervention records and the intervention planning records comprise scheduled and unscheduled well interventions.

4. The method of any one of claims 1 to 3, wherein the baseline operational risk value is determined based on:
a baseline likelihood of failure of the one or more storage wells based on the storage well data associated with routine operation of the one or more storage wells; and
a baseline consequence of failure of the one or more storage wells in terms of economic, environmental, health, safety, regulatory, and reputational impacts based on severity of well content release and ignition, wherein the severity of well content release comprises type of well content release, size of well content release and duration of well content release.

5. The method of any one of claims 1 to **4,** wherein the intervention risk value is determined based on:
an intervention likelihood of failure of the one or more storage wells based on the storage well data and the well intervention data; and
an intervention consequence of failure of the one or more storage wells in terms of economic, environmental, health, safety, regulatory, and reputational impacts based on the severity of well content release and ignition.

6. The method of any one of claims 1 to 5, wherein the post-mitigation operational risk value is determined based on:
a post-mitigation likelihood of failure of the one or more storage wells based on the storage well data and the well intervention data following the performance of one or more mitigation measures on each of the one or more storage wells; and
a post-mitigation consequence of failure of the one or more storage wells in terms of economic, environmental, health, safety, regulatory, and reputational impacts based on the severity of well content release and ignition.

7. The method of any one of claims 1 to 6, wherein the risk assessment model comprises a plurality of inputs as point values or distributions of values, wherein the distributions of values are processed using Monte Carlo calculation methods to generate probabilistic outcome distributions.

8. A system for managing risk of one or more storage wells, the system comprising:
one or more computing devices (806) connected to a server (804) through a network, wherein the server (804) comprises:
a memory (814); and
one or more processors (810) coupled to the memory (814) comprising program instructions, wherein the program instructions, when executed, comprises:
obtaining storage well data and well intervention data;
evaluating a risk profile of the one or more storage wells using a probabilistic risk assessment model based on the storage well data and the well intervention data by:
determining a baseline operational risk value for each of the one or more storage wells;
determining an intervention risk value for each of the one or more storage wells;
determining a post-mitigation operational risk value for each of the one or more storage wells following performance of one or more mitigation measures on each of the one or more storage wells; and
determining a net mitigated risk value based on the baseline operational risk value, the intervention risk value, and the post-mitigation operational risk value; and
producing a graphical output of the risk profile of the one or more storage wells, wherein the risk profile is usable to implement one or more future prevention or mitigation measures for reducing the risk profile of the one or more storage wells.

9. The system of claim 8, wherein the storage well data comprises at least one of well configuration data, well construction and completion data, well condition, leak and maintenance records, or operating environment data.

10. The system of any one of claims 8 or 9, wherein the well intervention data comprises at least one of intervention type data, well entry type data, historical intervention records, or intervention planning records, wherein the historical intervention records and the intervention planning records comprise scheduled and unscheduled well interventions.

11. The system of any one of claims 8 to 10, wherein the baseline operational risk value is determined based on:
a baseline likelihood of failure of the one or more storage wells based on the storage well data associated with routine operation of the one or more storage wells; and
a baseline consequence of failure of the one or more storage wells in terms of economic, environmental, health, safety, regulatory, and reputational impacts based on severity of well content release and ignition, wherein the severity of well content release comprises type of well content release, size of well content release and duration of well content release.

12. The system of any one of claims 8 to **11,** wherein the intervention risk value is determined based on:
an intervention likelihood of failure of the one or more storage wells based on the storage well data and the well intervention data; and
an intervention consequence of failure of the one or more storage wells in terms of economic, environmental, health, safety, regulatory, and reputational impacts based on the severity of well content release and ignition.

13. The system of any one of claims 8 to 12, wherein the post-mitigation operational risk value is determined based on:
a post-mitigation likelihood of failure of the one or more storage wells based on the storage well data and the well intervention data following the performance of one or more mitigation measures on each of the one or more storage wells; and
a post-mitigation consequence of failure of the one or more storage wells in terms of economic, environmental, health, safety, regulatory, and reputational impacts based on the severity of well content release and ignition.

14. The system of any one of claims 8 to 13, wherein the risk assessment model comprises a plurality of inputs as point values or distributions of values, wherein the distributions of values are processed using Monte Carlo calculation methods to generate probabilistic outcome distributions.

15. A non-transitory computer-readable storage medium storing program instructions, that when executed, cause one or more processors to perform operations comprising:
obtaining storage well data and well intervention data;
evaluating a risk profile of the one or more storage wells using a probabilistic risk assessment model based on the storage well data and the well intervention data by:
determining a baseline operational risk value for each of the one or more storage wells;
determining an intervention risk value for each of the one or more storage wells;
determining a post-mitigation operational risk value for each of the one or more storage wells following performance of one or more mitigation measures on each of the one or more storage wells; and
determining a net mitigated risk value based on the baseline operational risk value, the intervention risk value, and the post-mitigation operational risk value; and
producing a graphical output of the risk profile of the one or more storage wells, wherein the risk profile is usable to implement one or more future prevention or mitigation measures for reducing the risk profile of the one or more storage wells.
